# EUROPEAN PATENT SPECIFICATION

(11) **EP 4 065 393 B1**
(45) Date of publication and mention of the grant of the patent: **21.10.2026**
(21) Application number: 20894761.4
(22) Date of filing: 27.11.2020
(51) Int. Cl.: B60G 3/20, B62K 25/16, B62K 25/24, B62K 25/00

(54) **FRONT SUSPENSION ASSEMBLY FOR A VEHICLE**
FRONTAUFHÄNGUNGSANORDNUNG FÜR EIN FAHRZEUG
ENSEMBLE DE SUSPENSION AVANT D'UN VÉHICULE

(30) Priority: 29.11.2019 US 201962941976 P
(43) Date of publication of application: 05.10.2022
(73) Proprietor: Bombardier Recreational Products Inc., Valcourt, Québec J0E 2L0 (CA)
(72) Inventor: MERCIER, Daniel, Magog, Québec J1X 3J9 (CA)
(74) Representative: Murgitroyd & Company
(86) International application number: PCT/IB2020/061238
(87) International publication number: WO 2021/105954

(56) References cited:
- DE-A1- 2 820 882
- FR-A1- 2 397 317
- JP-A- H01 204 888
- US-A- 4 526 249
- US-A- 4 638 881
- US-A- 4 834 408
- US-A1- 2014 251 710
- US-A1- 2016 052 591

## Description

### FIELD OF TECHNOLOGY

The present technology relates to front suspension assemblies for vehicles.

### BACKGROUND

Motorcycles typically employ a telescopic fork front suspension. A downside of this type of suspension is known as "brake dive", wherein weight transfer towards the front wheel during braking causes the forks to compress, bringing the center of gravity forwards and lowering the front of the motorcycle.

One solution to this inconvenience is to replace the telescopic fork front suspension with a type of front suspension that can be designed to incorporate an anti-dive geometry.

One example of such a front suspension includes upper and lower swing arms that pivotally connect at one end to the frame of the motorcycle and to a steering knuckle at the other end such that the steering knuckle can pivot about a steering axis. The front wheel of the motorcycle is rotationally connected to the steering knuckle and pivots with the steering knuckle about the steering axis. The front suspension also includes a shock absorber assembly connected between the frame and the lower swing arm. To prevent interference between the shock absorber assembly and the upper swing arm, either the upper swing arm or the shock absorber assembly needs to be laterally closer to the wheel than the other of the upper swing arm and the shock absorber assembly.

The above geometry has the inconvenience that the closer the swing arms and shock absorber assembly are to the wheel, the more limited the angle by which the wheel can be steered is. A solution could be to move the swing arms and shock absorber assembly away from the wheel, however this limits the angle by which the motorcycle can lean during a turn before some of these components come into contact with the ground.

Additionally, in order to steer the front wheel connected to the above described front suspension assembly, linkages, such as a tie rod, need to be provided between the steering knuckle and a steering column of the motorcycle. These linkages also need to be located so as not to interfere with the components of the front suspension assembly and the front wheel, which could also lead to limitations of the maximum steering angle of the front wheel.

There is therefore a desire for a front suspension assembly for a vehicle, such as a motorcycle, that addresses at least some of the above-mentioned inconveniences.
DE2820882, published on November 23, 1978, assigned to Didier Jillet, and entitled "MOTORIZED VEHICLE", discloses a motorized vehicle with a drive unit which has a motor and a gear attached to the motor, as well as a front wheel and a rear wheel, each equipped with a wheel suspension. These wheel suspensions have at least one pivotable link.
US4,834,408, published on May 30, 1989, assigned to Elf Antar France, and entitled "WHEEL SUSPENSION OF LAND VEHICLES AND ESPECIALLY OF STEERABLE WHEELS", discloses an anti-dive suspension device for the front wheel of a vehicle presenting between the axle bracket and the vehicle body a kinematic suspension mechanism, wherein the relative movement of the stub axle bracket with respect to the vehicle body on horizontal ground, during functioning of the suspension, the geometry of the kinematic train ensures the horizontal moving apart of the stub axle with respect to the vehicle body when the load is increased and it relates to improvements to the wheel suspensions of land vehicles and especially of steerable wheels.

### SUMMARY

It is an object of the present technology to ameliorate at least some of the inconveniences present in the prior art.

According to one aspect of the present technology, there is provided a front suspension assembly for a vehicle according to appended claims 1-11.

According to another aspect of the present technology, there is provided a vehicle according to appended claims 12-15.

For the purposes of the present application, terms related to spatial orientation such as forward, rearward, front, rear, upper, lower, left, and right, are as they would normally be understood by a driver of the vehicle sitting thereon in a normal driving position with the vehicle being upright and steered in a straight ahead direction.

Embodiments of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of embodiments of the present technology will become apparent from the following description, the accompanying drawings and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1 is a perspective view taken from a front, right side of a motorcycle;
Figure 2 is a right side elevation view of the motorcycle of Fig. 1;
Figure 3 is a top plan view of the motorcycle of Fig. 1;
Figure 4 is a perspective view taken from a front, right side of a lower subframe, a steering assembly, a front suspension assembly and a front wheel of the motorcycle of Fig. 1;
Figure 5 is a right side elevation view of the components of Fig. 4;
Figure 6 is a top plan view of the components of Fig. 4;
Figure 7 is a left side elevation view the front suspension assembly and the steering assembly of Fig. 4, with a handlebar of the steering assembly removed;
Figure 8 is a top plan view of the components of Fig. 7;
Figure 9 is a perspective view taken from a front, right side of the lower subframe, and the front suspension assembly of Fig. 4;
Figure 10 is a right side elevation view of the components of Fig. 9;
Figure 11 is a top plan view of the components of Fig. 9;
Figure 12 is a front elevation view of the components of Fig. 9;
Figure 13 is a perspective view taken from a front, right side of the lower subframe, and the steering assembly of Fig. 4;
Figure 14 is a perspective view taken from a rear, right side of a lower swing arm of the front suspension assembly of Fig. 4;
Figure 15 is a left side elevation view of the lower swing arm of Fig. 14;
Figure 16 is a perspective view taken from a rear, right side of an upper swing arm of the front suspension assembly of Fig. 4;
Figure 17 is a left side elevation view of the upper swing arm of Fig. 16;
Figure 18 is a cross-section of the steering assembly and the front suspension assembly of Fig. 4 taken through line 18-18 of Fig. 7;
Figure 19 is a cross-section of the steering assembly and the front suspension assembly of Fig. 4 taken through line 19-19 of Fig. 8; and
Figure 20 is a cross-section of the steering assembly and the front suspension assembly of Fig. 4 taken through line 20-20 of Fig. 8.

It should also be noted that, unless otherwise explicitly specified herein, the drawings are not necessarily to scale.

### DETAILED DESCRIPTION

The present technology will be described herein with respect to a motorcycle 10. It is contemplated that at least some aspects of the present technology could also be implemented with vehicles that have three, four, or more wheels. It is contemplated that at least some aspects of the present technology could also be implemented with vehicles having ground engaging members other than wheels, such as in a snowmobile or a snow bike, where the one or more front ground engaging members is/are ski(s) and the one or more rear ground engaging member is/are endless drive track(s).

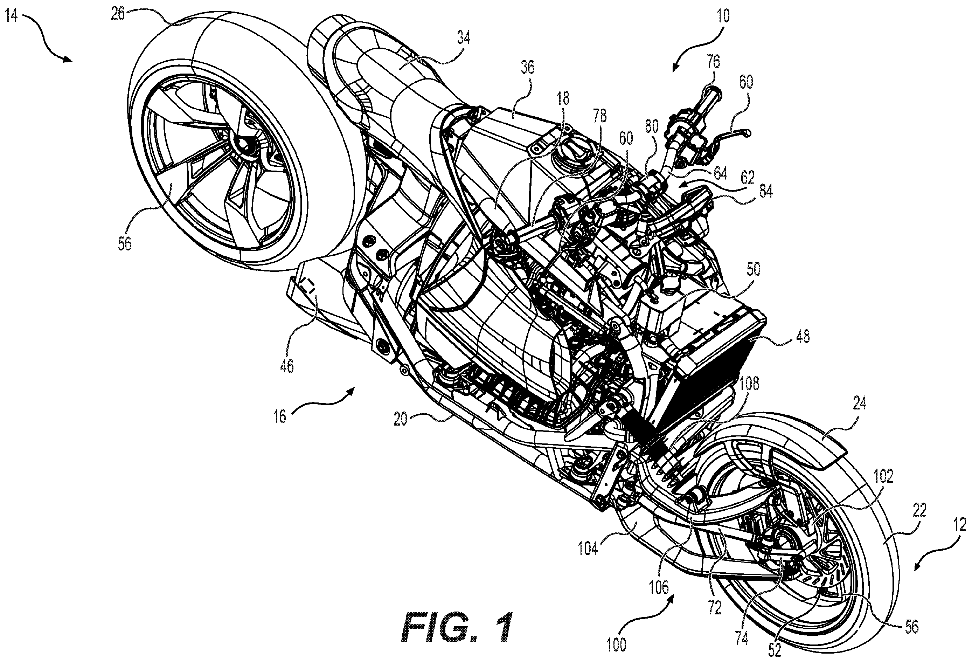

With reference to Figs. 1 to 3, the motorcycle 10 has a front end 12 and a rear end 14, defined consistently with a forward travel direction of the vehicle 10. The vehicle 10 has a frame 16. The frame 16 includes an upper subframe 18 and a lower subframe 20.

The motorcycle 10 has a single front wheel 22 mounted to the lower subframe 20 by a front suspension assembly 100. The front suspension assembly 100 will be described in more detail below. A front fender 24 is disposed over the front wheel 22. A single rear wheel 26 is mounted to the lower subframe 20 by a rear suspension assembly 28. The front wheel 22 and the rear wheel 26 each have a tire secured thereto. The front wheel 22, when steered in a straight ahead orientation, and the rear wheel 26 are laterally centered on the motorcycle 10. It is contemplated that the present technology could also be implemented on a vehicle with two rear wheels 26 and a single front wheel 22, or one or two rear wheels 26 and two front wheel 22, in which case each front wheel 22 would be provide with a corresponding front suspension assembly 100.

The rear suspension assembly 28 includes a rear swing arm 30 and a shock absorber assembly 32. The rear swing arm 30 is pivotally mounted at a front thereof to the lower subframe 20. The rear wheel 26 is rotatably mounted to the rear end of the rear swing arm 30 which extends on a left side of the rear wheel 26. The shock absorber assembly 32 is connected between the swing arm 30 and the lower subframe 20.

The motorcycle 10 has a straddle seat 34 mounted to the upper subframe 18. In the illustrated embodiment, the straddle seat 34 is intended to accommodate a single adult-sized rider, *i.e.* the driver. It is however contemplated that a straddle seat long enough to accommodate the driver and a passenger could be provided. A fuel tank 36 is mounted to the upper subframe 18 in front of the seat 34.

Footrests (not shown) are disposed on either side of the motorcycle 10 vertically lower than the straddle seat 34 to support the driver's feet. The footrests are connected to the lower subframe 20. It is contemplated that the footrests could be foot pegs or footboards.

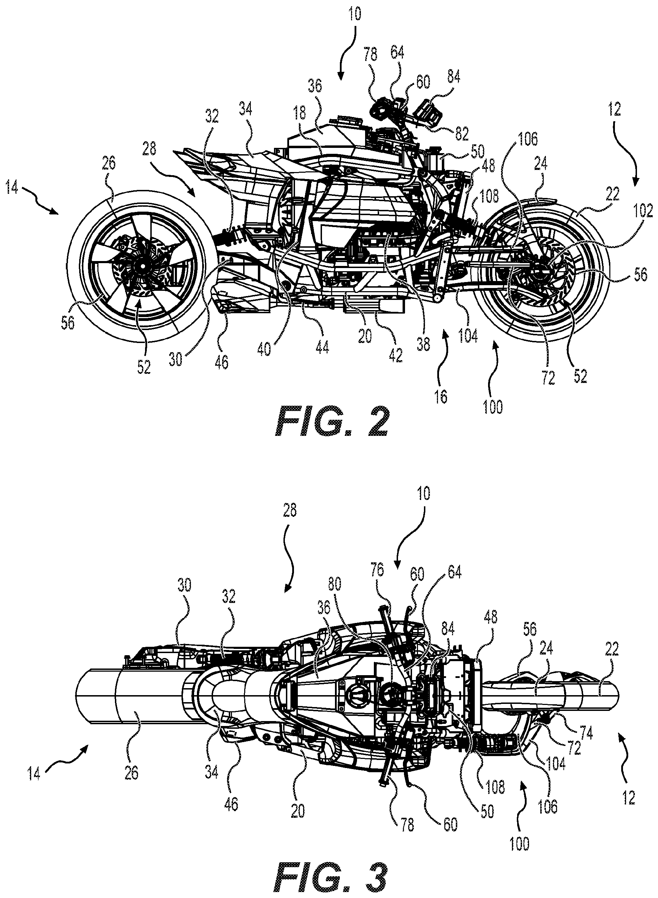

With reference to Fig. 2, the motorcycle 10 includes a motor 38 and a transmission 40. In the illustrated embodiment of the motorcycle 10, the motor 38 is an internal combustion engine. It is however contemplated that the motor 38 could be other than an internal combustion engine, for example an electric motor, a hybrid or the like. The transmission 40 is a continuously variable transmission (CVT), but other types of transmissions are contemplated. The motor 38 is mounted to the lower subframe 20. The lower subframe 20 extends along the sides and a front of the motor 38 and as such partially surrounds the motor 38. The lower subframe 20 also extends below the motor 38. The motor 38 is operatively connected to the rear wheel 26 via the transmission 40 to drive the rear wheel 26. It is contemplated that the motor 28 could also drive the front wheel 22. In the present embodiment, a driveshaft (not shown) transmits torque from the transmission 40 to the rear wheel 26. It is contemplated that the driveshaft could be replaced by a chain drive, a belt drive and/or gear train or the like.

As can be seen in Fig. 2, the motorcycle 10 also includes an exhaust system fluidly connected to the motor 38 and extending in part under the lower subframe 20. The exhaust system includes a pre-muffler 42 disposed under the motor 38, an exhaust pipe 44 connected to and extending rearward from the pre-muffler 42, and a muffler 46 connected to the rear end of the exhaust pipe 44. The muffler 46 is disposed in front of the rear wheel 26 below the rear swing arm 30.

A radiator 48 is mounted to the lower subframe 20. The radiator 48 is disposed longitudinally forward of the motor 38 and of the lower subframe 20, longitudinally rearward of and partially above the front wheel 22, and is laterally centered on the motorcycle 10. As best seen in Fig. 2, the radiator 48 is angled such that the top of the radiator 48 is forward of the bottom of the radiator 48. The radiator 48 is fluidly connected to the motor 38 for cooling the engine 38. The radiator 48 is also fluidly connected to a coolant reservoir 50. The coolant reservoir 50 is disposed vertically higher than the radiator 48, rearward of the radiator 48 and forward of the fuel tank 36.

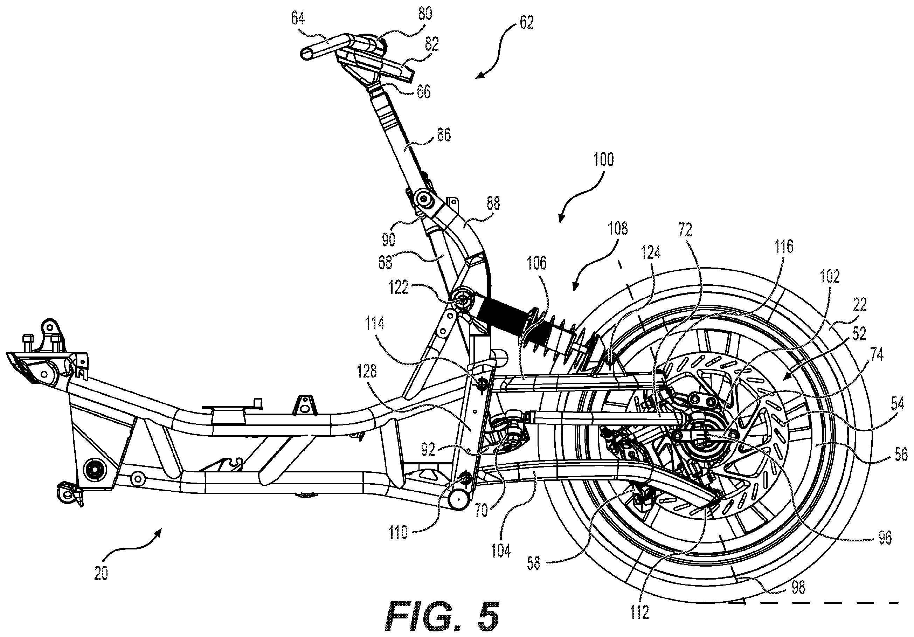

With reference to Fig. 2, each of the wheels 22, 26 is provided with a brake assembly 52. Each brake assembly 52 is a disc-type brake mounted onto a connector 102 (described in more detail below) for the front wheel 22 and onto a spindle (not shown) for the rear wheel 26. Other types of brakes are contemplated. With additional reference to Fig. 5 showing the front brake assembly 52, each brake assembly 52 includes a rotor 54 mounted onto a wheel hub 56 of the corresponding wheel 22, 25 and a stationary caliper 58 straddling the rotor 54. For the front brake assembly 52, the stationary caliper 58 is mounted to a rear side of the connector 102. Brake pads (not shown) are mounted to the caliper 58 so as to be disposed between the rotor 54 and the caliper 58 on either side of the rotor 54. Brake levers 60 are operatively connected to the brake assemblies 52 to actuate the brake assemblies 52.

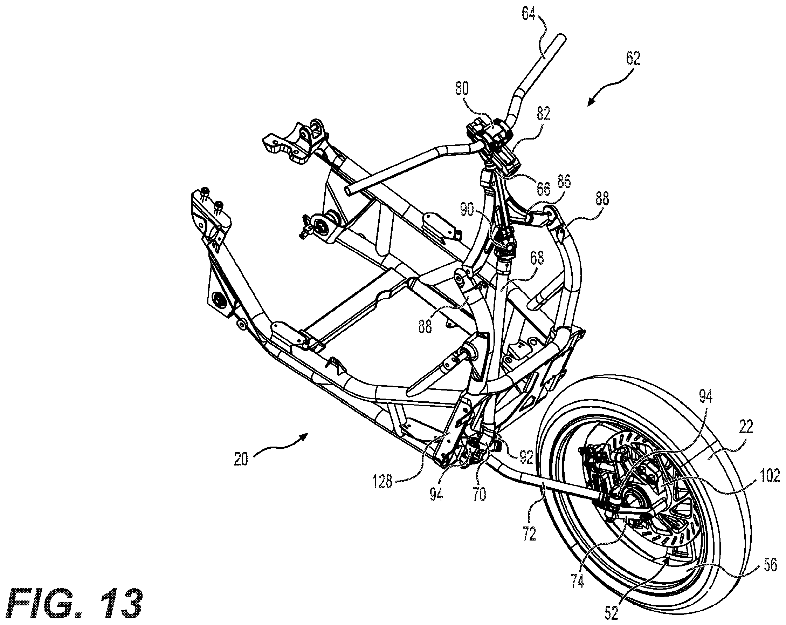

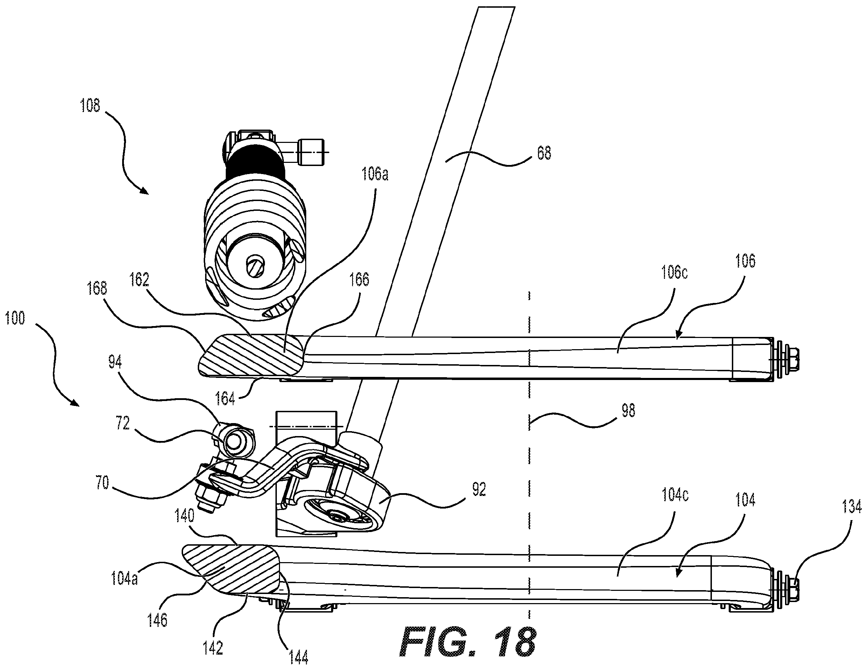

With reference to Figs. 13 and 18, a steering assembly 62 of the motorcycle 10 will be described. The steering assembly 62 includes a handlebar 64, upper and lower steering columns 66, 68, a pitman arm 70, a tie rod 72 and a V-shaped bracket 74. The handlebar 64 is disposed in front of the seat 20. The handlebar 64 is used by the driver to turn the front wheel 22 to steer the vehicle 10. It is contemplated that in some embodiments, the handlebar 64 could be replaced by a different type of steering input device such as a steering wheel for example. With reference to Fig. 1, left hand grip 76 is placed around the left side of the handlebar 64 near the left end thereof and a right hand grip 78 is placed around the right side of the handlebar 64 near the right end thereof. The right hand grip 78 provides twist-grip type throttle control. The brake levers 60 are mounted to the left and right sides of the handlebar 64. It is contemplated that one of the two brake levers 60 could be omitted and that only a single brake lever 60 could be provided. It is contemplated that a brake pedal could be provided proximate one of the driver's footrests and used in place of or in addition to one or both of the brake levers 60.

Returning to Figs. 1 to 3 and 13, a central portion of the handlebar 64 is clamped by a clamp 80 to a mount 82. The clamp 80 and mount 82 permit positional adjustment of the handlebar 64 with respect to the rest of the steering assembly 62. A display cluster 84 is connected to a front of the mount 82. As can be seen in Fig. 13, the mount 82 is connected to an upper end of the upper steering column 66. The upper steering column 66 is pivotally supported in a steering column support 86. The steering column support 86 is connected to upper ends of front vertical arms 88 of the lower subframe 20. From the mount 82, the upper steering column 66 extends downwardly and forward. The upper steering column 66 is disposed in front of the fuel tank 36 and rearward of the coolant reservoir 50. The lower end of the upper steering column 66 is connected to a universal joint 90. The universal joint 90 connected the lower end of the upper steering column 66 to the upper end of the lower steering column 68. From the universal joint 90, the lower steering column 68 extends downward, forward and leftward. The lower end of the lower steering column 68 is pivotably connected to the lower subframe 20 via a steering column support 92. The lower steering column 68 is disposed in front of the motor 38 and predominantly behind the radiator 48.

As best seen in Fig. 18, the pitman arm 70 connects to and extends generally rightward from the lower end of the lower steering column 68. As can be seen, when the motorcycle 10 is steered in a straight ahead direction, from the lower steering column 68 the pitman arm 70 first extends radially outward from the axis of rotation of the lower steering column 68, more precisely upward, forward and rightward; then downward, forward and rightward; and finally upward, forward and rightward. The right end of the pitman arm 70 is pivotally connected to the rear end of the tie rod 72 by a rear tie rod end 94 of the tie rod 72. As can be seen, the tie rod end 94 is disposed above the right end of the pitman arm 70. As can be seen in Fig. 13, when the motorcycle 10 is steered in a straight ahead direction, from the tie rod end 94, the tie rod 72 first extends forward, and then extends forward and leftward toward the connector 102. The front end of the tie rod 72 is pivotally connected to the bracket 74 by a front tie rod end 94. The front tie rod end 94 is disposed above the right end of the bracket 74. It is contemplated that the bracket 74 could be integrally formed with the connector 102. It is also contemplated that the bracket 74 could be replaced by a tab connected to or integrally formed with the connector 102.

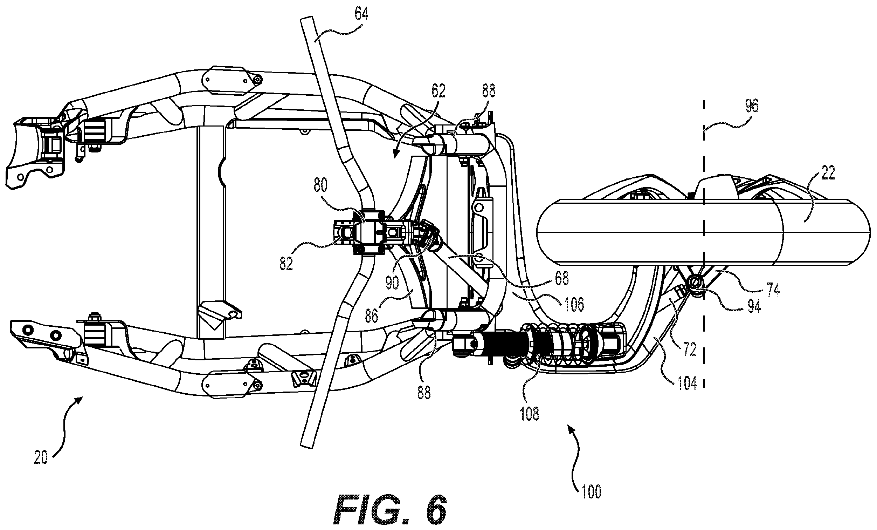

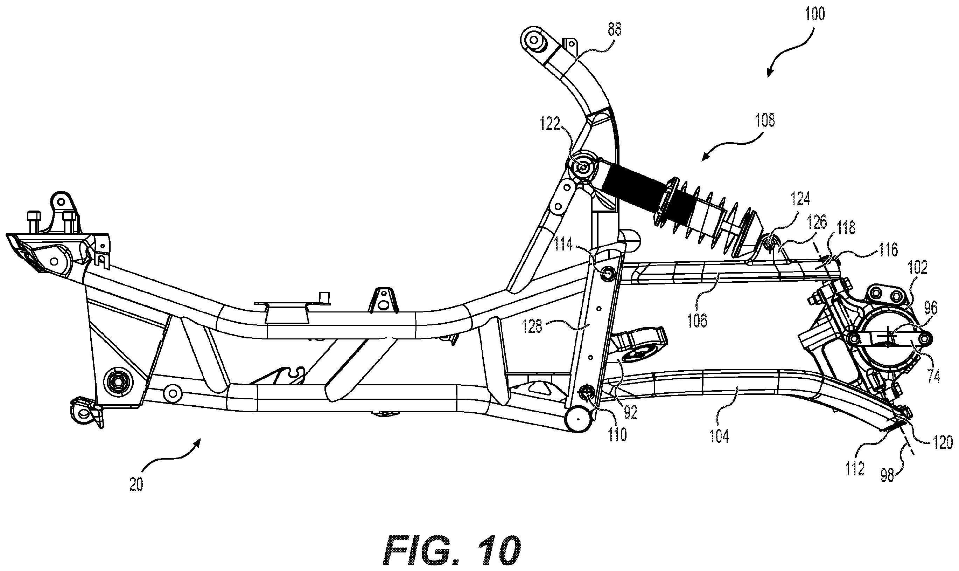

The bracket 74 is connected to the connector 102. In the present embodiment, the connector 102 is a steering knuckle to which the front wheel 22 is rotationally connected. The wheel 22 rotates about a wheel axis 96 (Fig. 10) defined by the steering knuckle 102. As can be seen in Fig. 10, the bracket 74 is vertically aligned with the wheel axis 96. As can be seen in Fig. 6, when the motorcycle 10 is steered in a straight ahead direction, the front tie rod end 94 connects to the bracket 74 at a position that is rearward of the wheel axis 96. It is contemplated that in other embodiments, the connector 102 could be of a different type depending on the type of ground engaging member to be connected to it. For example, in embodiments where the vehicle is a snow bike and the front ground engaging member is a ski, the connector 102 is a ski leg. As in the present embodiment the front ground engaging member is the front wheel 22, the connector 102 will be referred to as the steering knuckle 102 for the remainder of the description. As best seen in Fig. 2, the front fender 24 is fastened to a top of the steering knuckle 102. It is also contemplated that the front fender 24 could be fastened to the frame 16.

When the driver turns the handlebar 62, the steering columns 66, 68 and the pitman arm 70 pivot. As a result, the tie rod 72 moves forward or backward, depending on the direction in which the handlebar 62 is turned, which pushes or pulls on the bracket 74. This causes the bracket 74 and the steering knuckle 102 to turn about a steering axis 98 (Fig. 10), which causes the front wheel 22 to steer about the steering axis 98. The bracket 74, the steering knuckle 102 and the wheel 22 turn together about the steering axis 98. As can be seen in Fig. 10, the steering axis 98 extends rearward as it extends upward. As can also be seen in Fig. 10, the point on the steering axis 98 that is vertically aligned with the wheel axis 96 is disposed behind the wheel axis 96. As can be seen in Fig. 5, the steering axis 98 is angled such that it intersects the ground forward of the wheel axis 96. This is known as a positive caster angle and provides some self-centering of the front wheel 24.

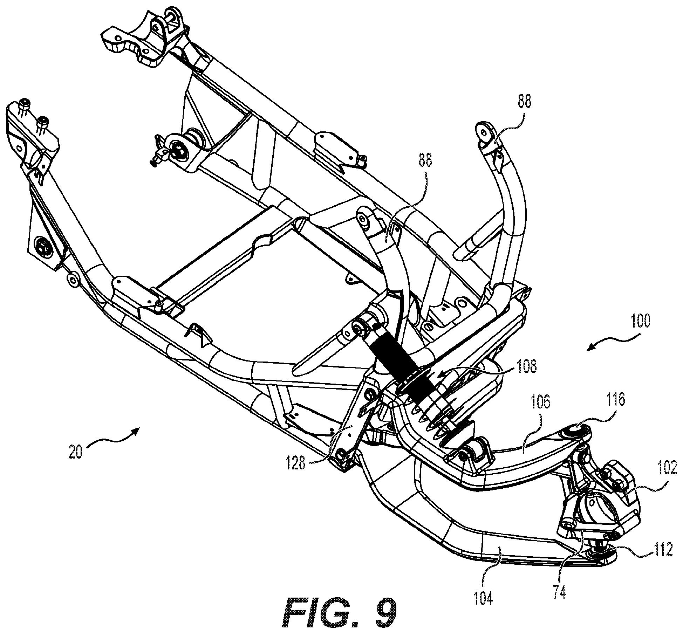

Turning now to Figs. 9 to 12, the front suspension assembly 100 will be described in more detail. The front suspension assembly 100 includes the steering knuckle 102, a lower swing arm 104, an upper swing arm 106 and a shock absorber assembly 108.

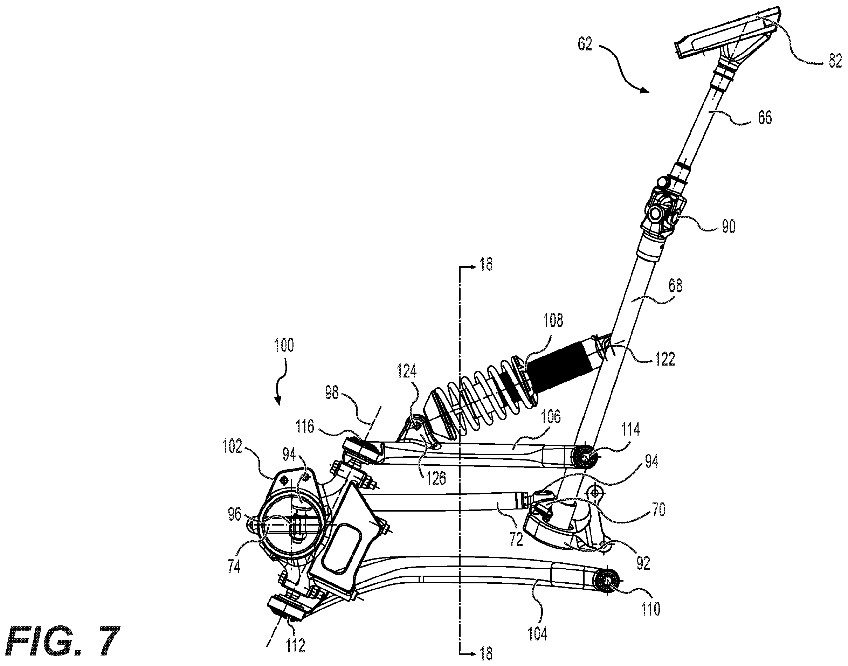

The lower swing arm 104 is pivotally connected at a rear thereof to the lower subframe 20 about a laterally extending lower swing axis 110. The front end of the lower swing arm 104 is pivotally connected to a lower end of the steering knuckle 102 by a ball joint 112. The ball joint 112 is housed in the front end of the lower swing arm 104. The upper swing arm 106 is above the lower swing arm 104. The upper swing arm 106 is pivotally connected at a rear thereof to the lower subframe 20 about a laterally extending upper swing axis 114. As best seen in Fig. 10, the upper swing axis 114 is vertically higher than and forward of the lower swing axis 110. The front end of the upper swing arm 106 is pivotally connected to an upper end of the steering knuckle 102 by a ball joint 116. The ball joint 116 is housed in the front end of the upper swing arm 106. As best seen in Fig. 10, a center 118 of the ball joint 116 is vertically higher than and rearward of the center 120 of the ball joint 112. The steering axis 98 passes through the centers 118, 120 of the ball joints 116, 112. It is contemplated that the positions of the connections of the front ends of the swing arms 104, 106 to the steering knuckle 102, and therefore the positions of the centers 118, 120 of the ball joints 116, 112, could be different than illustrated depending on the desired angle of the steering axis 98. As best seen in Figs. 7 and 10, the length of the upper swing arm 106 is smaller than the length of the lower swing arm 104.

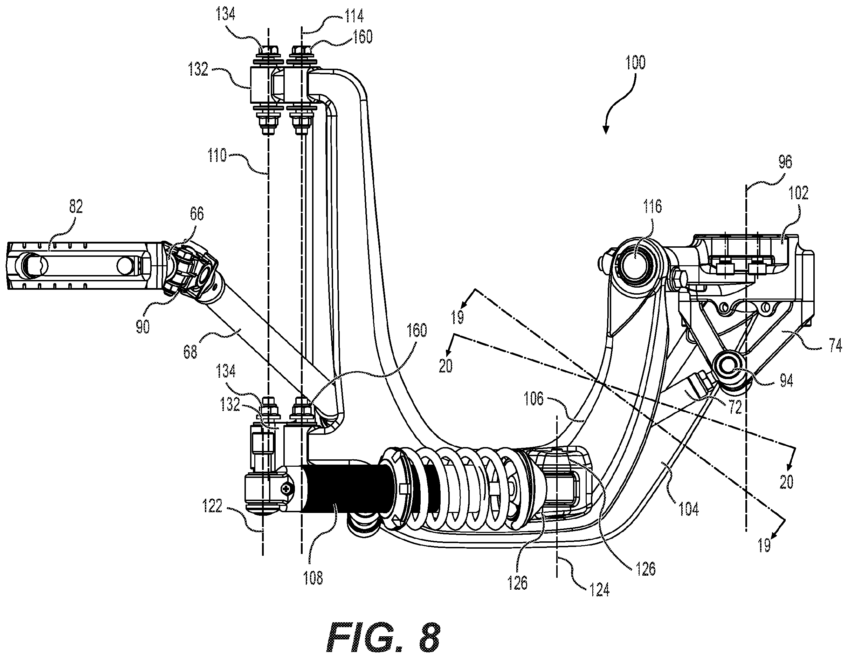

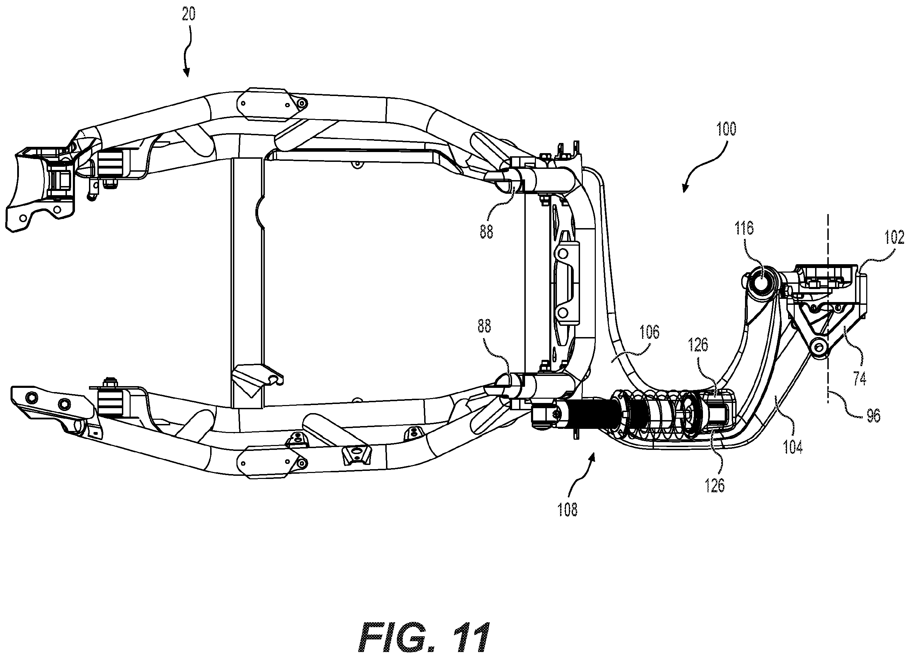

With additional reference to Fig. 5, the shock absorber assembly 108 of the present embodiment is a coil-over shock absorber, or coilover, but other types are contemplated. The shock absorber assembly 108 has an upper end pivotally connected to the right side of the right front vertical arm 88 of the lower subframe 20 about an upper shock absorber axis 122. As can also be seen in Fig. 10, the upper shock absorber axis 122 is vertically higher than the upper swing axis 114. As can be seen in Fig. 8, the upper shock absorber axis 122 is rearward of both swing arm axes 110, 114. From its upper end, the shock absorber assembly 108 extends above the upper swing arm 106 forward and downward to its lower end. As can be seen in Fig. 11, the shock absorber assembly 108 is laterally spaced from the steering knuckle 102 on the right side of the steering knuckle 102. The lower end of the shock absorber assembly 108 is pivotally connected to a top of the upper swing arm 106 about a lower shock absorber axis 124. The lower end of the shock absorber assembly 108 is received between and fastened to two tabs 126 extending upward from and defined by the upper swing arm 106. As can be seen in Fig. 10, the lower shock absorber axis 124 is disposed forward of the upper swing axis 114 and rearward of the center 118 of the ball joint 116. In a longitudinal direction of the motorcycle 10 (i.e. as seen in Fig. 10), the lower shock absorber axis 124 is closer to the center 118 of the ball joint 116 than to the upper swing axis 114.

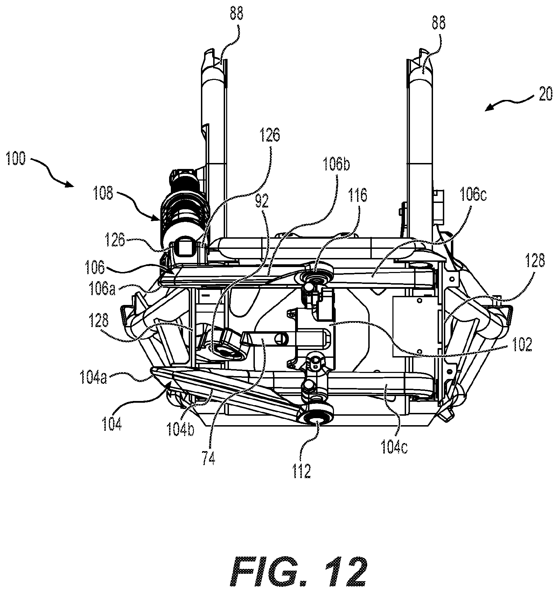

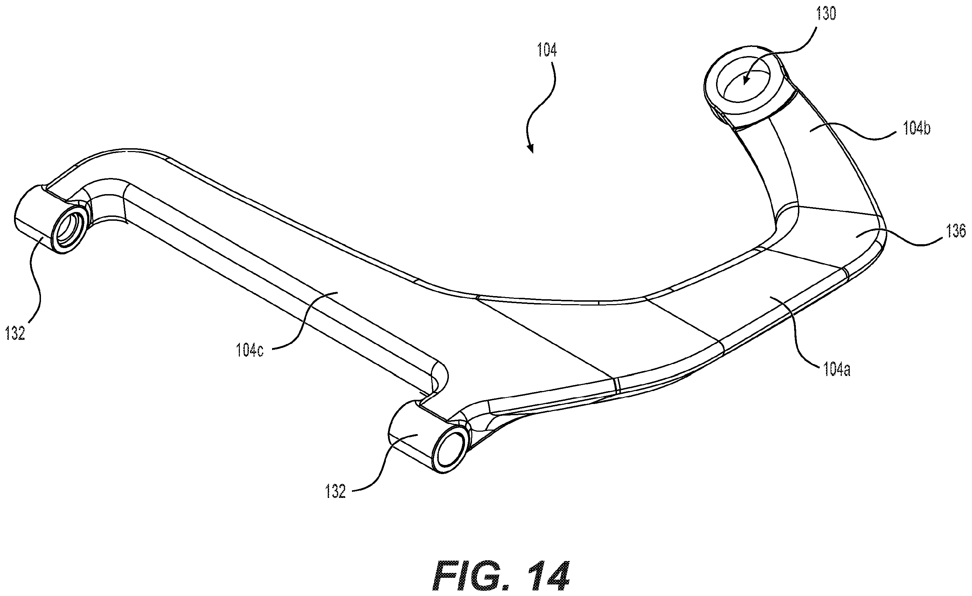

With reference to Figs. 14, 15 and 18 to 20, the lower swing arm 104 will be described in more detail. The lower swing arm 104 has a portion 104a that extends generally longitudinally, a portion 104b that extends downward and generally laterally toward the left from the front end of the portion 104a, and a portion 104c that extends laterally toward the left from the rear end of the portion 104a. The portions 104a, 104b, and 104c are integrally formed. The portion 104a extends generally forward from the lower subframe 20 and is laterally spaced on a right side of the steering knuckle 102. The portion 104b extends to the steering knuckle 102 to pivotally connect the lower swing arm 104 to the steering knuckle 102. The portion 104c extends laterally between arms 128 of the lower subframe 20, as best seen in Fig. 12, to pivotally connect the lower swing arm 104 to the lower subframe 20.

The portion 104b defines an aperture 130 at the end thereof. The aperture 130 receives the ball joint 112 therein. The portion 104c has two mounts 132 disposed on a rear side thereof at opposite ends thereof. As such, the mounts 132 are disposed on opposite sides of the steering knuckle 102. The mounts 132 are cylindrical tubes. Each mount 132 is pivotally connected to its corresponding arm 128 of the lower subframe 20 about the lower swing axis 110 by a fastener 134 (Fig. 8).

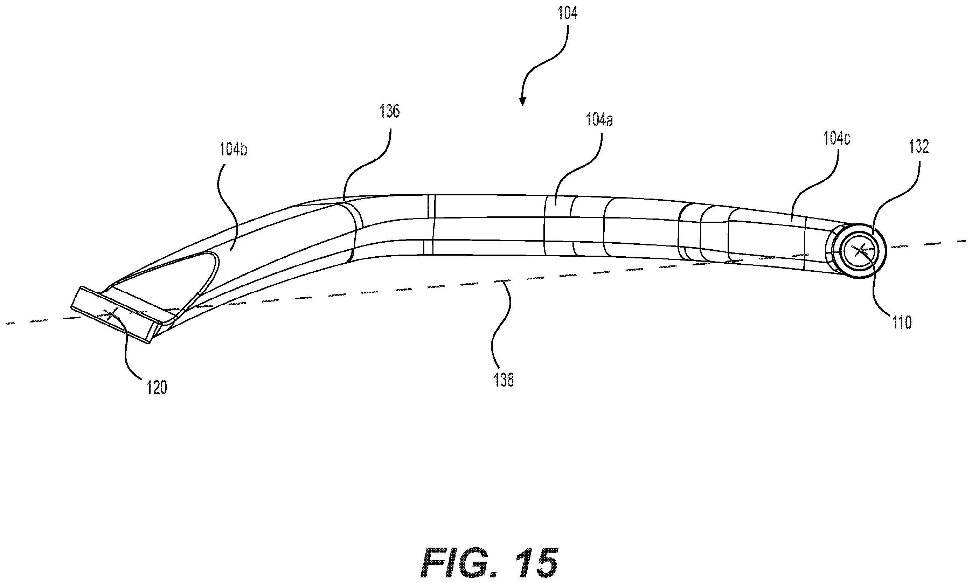

As the portion 104b extends downward from the front end of the portion 104a, the portions 104a, 104b connect at an apex 136. As can be seen in Fig. 15, the apex 136 is vertically higher than a line 138 extending between the lower swing arm pivot axis 110 and the center 120 of the ball joint 112, which corresponds to the connection point between the portion 104b and the steering knuckle 102.

With reference to Fig. 18, it can be seen from the cross-section taken across the width of the portion 104a that the portion 104a has a flat top 140, a flat bottom 142, a vertical inner side 144 and an outer side 146 that extends inward and downward from the top 140 to the bottom 142. It can also be seen that the corners formed between the top 140, the bottom 142, the inner side 144 and the outer side 146 are rounded.

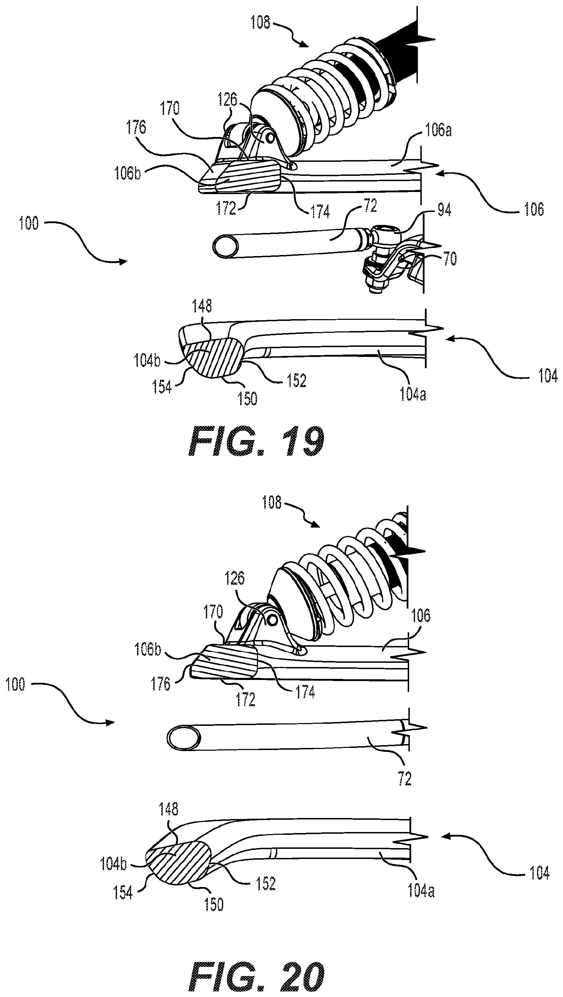

With reference to Figs. 19 and 20, it can be seen from the illustrated cross-sections of the portion 104b that the portion 104b has a flat top 148, a flat bottom 150, a rear side 152 that extends forward and downward from the top 148 to the bottom 150, and a front side 154 that extends rearward and downward from the top 148 to the bottom 150. It can also be seen that the corners formed between the top 148, the bottom 150, the rear side 152 and the front side 154 are rounded.

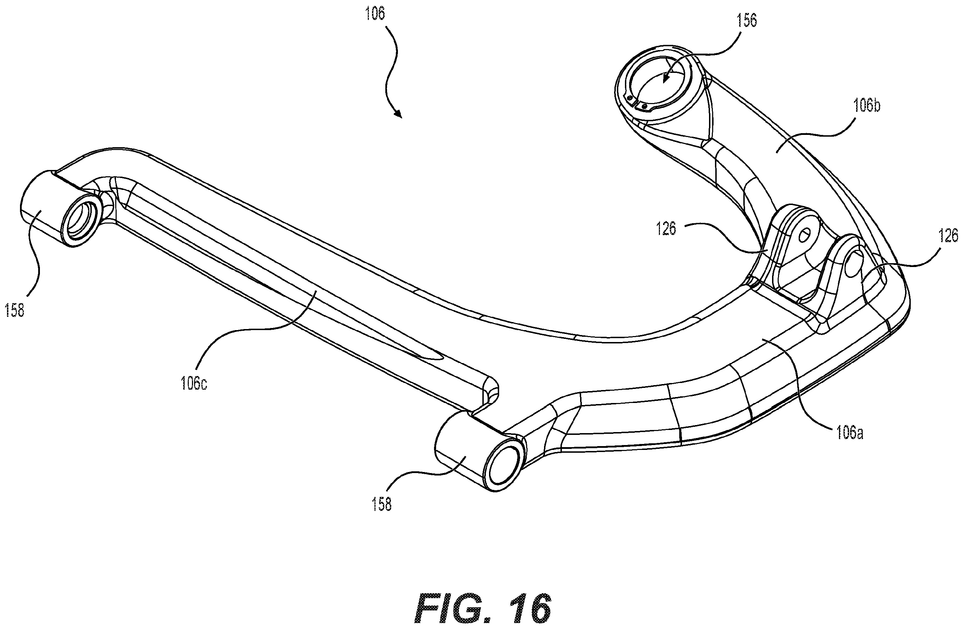

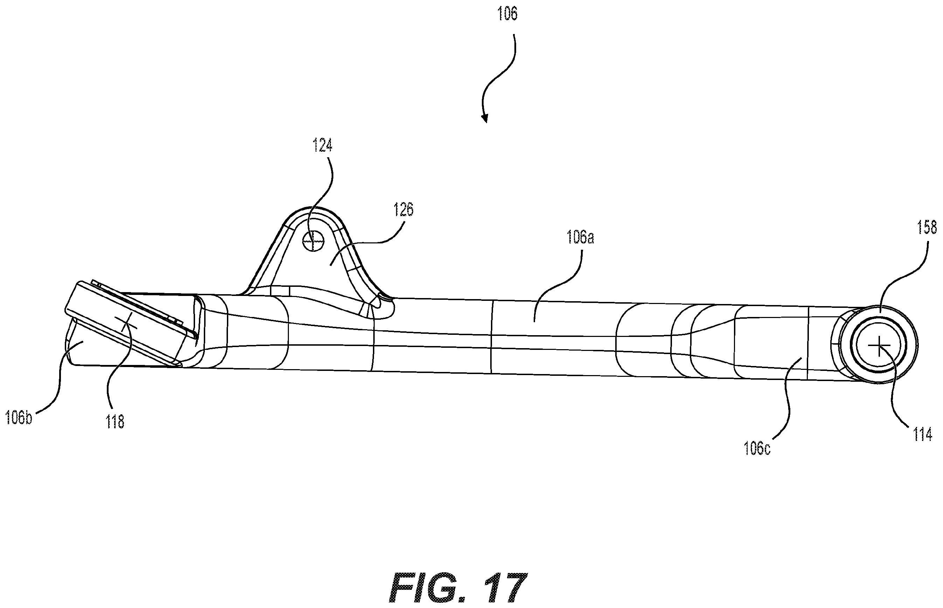

With reference to Figs. 12 and 16 to 20, the upper swing arm 106 will be described in more detail. The upper swing arm 106 has a portion 106a that extends generally longitudinally, a portion 106b that extends generally laterally toward the left from the front end of the portion 106a, and a portion 106c that extends laterally toward the left from the rear end of the portion 106a. The portions 106a, 106b, and 106c are integrally formed. The portion 106a extends generally forward from the lower subframe 20 and is laterally spaced on a right side of the steering knuckle 102. As best seen in Fig. 12, the portion 106a is laterally closer to the steering knuckle 102 than the portion 104a of the lower swing arm 104. The portion 106b extends to the steering knuckle 102 to pivotally connect the upper swing arm 106 to the steering knuckle 102. The portion 106c extends laterally between the arms 128 of the lower subframe 20, as best seen in Fig. 12, to pivotally connect the upper swing arm 106 to the lower subframe 20.

The tabs 126 extend upwardly from the front portion of the portion 106a. As such, the lower end of the shock absorber assembly 108 is pivotally connected to the front portion of the portion 106a and extends above the first portion 106a. The portion 106b defines an aperture 156 at the end thereof. The aperture 156 receives the ball joint 116 therein. The portion 106c has two mounts 158 disposed on a rear side thereof at opposite ends thereof. As such, the mounts 158 are disposed on opposite sides of the steering knuckle 102. The mounts 158 are cylindrical tubes. Each mount 158 is pivotally connected to its corresponding arm 128 of the lower subframe 20 about the upper swing axis 114 by a fastener 160 (Fig. 8).

With reference to Fig. 18, it can be seen from the cross-section taken across the width of the portion 106a that the portion 106a has a flat top 162, a flat bottom 164, a vertical inner side 166 and an outer side 168 that extends outward and downward from the top 162 to the bottom 164. It can also be seen that the corners formed between the top 162, the bottom 164, the inner side 166 and the outer side 168 are rounded.

With reference to Figs. 19 and 20, it can be seen from the illustrated cross-sections of the portion 106b that the portion 106b has a flat top 170, a flat bottom 172, a vertical rear side 174, and a front side 176 that extends forward and downward from the top 170 to the bottom 172. It can also be seen that the corners formed between the top 170, the bottom 172, the rear side 174 and the front side 176 are rounded.

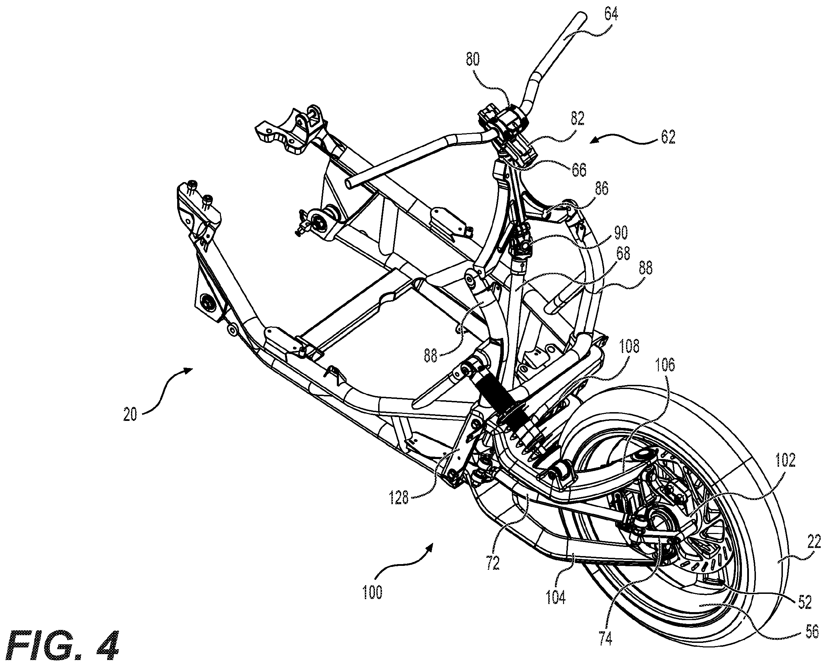

As can be seen in Fig. 18, the pitman arm 70 is disposed laterally between the outer edges of the first portions 104a, 106a and the steering column 168. As can be seen in Figs. 4 to 8, the tie rod 72 is vertically between the lower and upper swing arms 104, 106, and part of the tie rod 72 is disposed laterally between inner and outer edges of the portions 104a, 106a of the swing arms 104, 106. Also, as would be understood from Fig. 18, for the portion of the tie rod 72 that is longitudinally aligned with the portions 104a, 106a of the swing arms 104, 106, the inner edges of the portions 104a, 106a, which correspond to the inner sides 144, 166, are disposed laterally closer to the steering axis 98 than this portion of the tie rod 72. As such, the lower and upper swing arms 104, 106 prevent the tie rod 72 from coming into contact with the front wheel 22 when the front wheel 22 is steered for making a left turn and from making contact with the ground when the motorcycle 10 is tilted to the right when making a right turn.

It is contemplated that the steering assembly 62 and the suspension assembly 100 could be arranged as a mirror image of what is shown in the figures such that the steering knuckle would be provided on a left side of the front wheel 22.

Modifications and improvements to the above-described embodiments of the present technology may become apparent to those skilled in the art. The foregoing description is intended to be exemplary rather than limiting. The scope of the present technology is therefore intended to be limited solely by the scope of the appended claims.

## Claims

1. A front suspension assembly (100) for a vehicle (10) comprising:
a connector (102) adapted for connection to at least one front ground engaging member (22) of the vehicle (10);
a lower swing arm (104) adapted for pivotal connection to a frame (16) of the vehicle about a lower swing axis (110) and being pivotally connected to the connector (102), the lower swing arm (104) having:
a first portion (104a) extending generally forwardly from the lower swing axis (110) and being laterally spaced from the connector (102) on a first side of the connector (102), and
a second portion (104b) extending generally laterally from a front of the first portion (104a) to the connector (102), the second portion (104b) being pivotally connected to the connector (102);
an upper swing arm (106) adapted for pivotal connection to the frame (16) about an upper swing axis (114) and being pivotally connected to the connector (102), the upper swing arm (106) being above the lower swing arm (104), the upper swing arm (106) having:
a first portion (106a) extending generally forwardly from the upper swing axis (114) and being laterally spaced from the connector (102) on the first side of the connector (102), and
a second portion (106b) extending generally laterally from a front of the first portion (106a) to the connector (102), the second portion (106b) being pivotally connected to the connector (102),
the connector (102) being pivotable relative to the lower and upper swing arms (104, 106) about a steering axis (98); and
a shock absorber assembly (108) having a first end adapted for pivotal connection to the frame (16) above the upper swing axis (114) and a second end pivotally connected to a front portion of the first portion (106a) of the upper swing arm (106).

2. The front suspension assembly (100) of claim 1, wherein:
the at least one front ground engaging member (22) is a single front wheel; and
the connector (102) is a steering knuckle, the steering knuckle being adapted for rotationally connecting to the front wheel.

3. The front suspension assembly (100) of claim 1, wherein:
the lower swing arm (104) is pivotally connected to a lower end of the connector (102); and
the upper swing arm (106) is pivotally connected to an upper end of the connector (102).

4. The front suspension assembly (100) of claim 1, wherein:
the lower swing arm (104) further comprises a third portion extending laterally from a rear end of the first portion (104a) of the lower swing arm (104);
the third and second portions (104c, 104b) of the lower swing arm (104) extend on a same side of the first portion (104a); and
the third portion (104c) is adapted for pivotally connecting the lower swing arm (104) to the frame (16).

5. The front suspension assembly (100) of claim 4, wherein:
the third portion (104c) of the lower swing arm (104) has a first mount (132) adapted for pivotally connecting to the frame (16) about the lower swing axis (110) and a second mount (132) adapted for pivotally connecting to the frame (16) about the lower swing axis (110); and
the first and second mounts (132) are disposed on opposite sides of the connector (102).

6. The front suspension assembly (100) of any one of claims 1 to 5, wherein:
the upper swing arm (106) further comprises a third portion (106c) extending laterally from a rear end of the first portion (106a) of the upper swing arm (106);
the third and second portions (106c, 106b) of the upper swing arm (106) extend on a same side of the first portion (106a); and
the third portion (106c) is adapted for pivotally connecting the upper swing arm (106) to the frame (16).

7. The front suspension assembly (100) of claim 6, wherein:
the third portion (106c) of the upper swing arm (106) has a first mount adapted for pivotally connecting to the frame (16) about the upper swing axis (114) and a second mount adapted for pivotally connecting to the frame (16) about the upper swing axis (114); and
the first and second mounts (132) are disposed on opposite sides of the connector (102).

8. The front suspension assembly (100) of claim 1, wherein the shock absorber assembly (108) is laterally spaced from the connector (102) on the first side of the connector (102).

9. The front suspension assembly (100) of claim 1, wherein the shock absorber assembly (108) extends forward and downward from the first end of the shock absorber assembly (108) to the second end of the shock absorber assembly (108) and extends above the first portion (106a) of the upper swing arm (106).

10. The front suspension assembly (100) claim 1, wherein a length of the upper swing arm (106) is smaller than a length of the lower swing arm (104).

11. The front suspension assembly (100) of claim 1, wherein a cross-section taken across a width of the lower swing arm (104) has an outer side extending laterally inward and downward from a top of the lower swing arm (104) to a bottom of the lower swing arm (104).

12. A vehicle (10) comprising:
a frame (16);
a motor (38) mounted to the frame (16);
a rear suspension assembly (28) operatively connected to the frame (16);
at least one rear ground engaging member (26) operatively connected to the rear suspension assembly (28);
the front suspension assembly (100) of any one of claims 1 to 11 operatively connected to the frame (16);
at least one front ground engaging member (22) operatively connected to the front suspension assembly (100), the motor (38) being operatively connected to at least one of the front and rear ground engaging members (22, 26); and
a steering assembly (62) operatively connected to the connector (102), the steering assembly (62) comprising:
a steering input device (64) pivotally supported by the frame (16);
a steering column (66, 68) connected to the steering input device; and
a tie rod (72) operatively connected between the steering column (66, 68) and the connector (102), the tie rod (72) being vertically between the lower and upper swing arms (104, 106).

13. The vehicle (10) of claim 12, wherein the at least one rear ground engaging member (26) is a single rear wheel.

14. The vehicle (10) of claim 12, wherein:
the steering assembly (62) further comprises a pitman arm (70) connected to the steering column (66, 68);
the pitman arm (70) pivotally connects the tie rod (72) to the steering column (66, 68);
and
the pitman arm (70) being disposed laterally between outer edges of the first portions (104a, 106a) of the lower and upper swing arms (104, 106) and the steering column (66, 68).

15. The vehicle (10) of claim 12, wherein an inner edge of the first portion (104a, 106a) of one of the lower and upper swing arms (104, 106) is laterally closer to the steering axis (98) than a portion of the tie rod (72), the portion of the tie rod (72) being the portion of the tie rod (72) being longitudinally aligned with the first portion (104a, 106a) of the one of the lower and upper swing arms (104, 106).

## Patentansprüche

1. Frontaufhängungsanordnung (100) für ein Fahrzeug (10), umfassend:
ein Verbindungsstück (102), das zum Anschluss an mindestens ein vorderes Bodenkontaktelement (22) des Fahrzeugs (10) geeignet ist;
einen unteren Schwingarm (104), der zur schwenkbaren Verbindung mit einem Rahmen (16) des Fahrzeugs um eine untere Schwingachse (110) ausgelegt und schwenkbar mit dem Verbindungsstück (102) verbunden ist, wobei der untere Schwingarm (104) Folgendes aufweist:
einen ersten Abschnitt (104a), der sich im Allgemeinen von der unteren Schwingachse (110) nach vorn erstreckt und seitlich vom Verbindungsstück (102) auf einer ersten Seite des Verbindungsstücks (102) beabstandet ist, und
einen zweiten Abschnitt (104b), der sich im Allgemeinen seitlich von der Vorderseite des ersten Abschnitts (104a) bis zum Verbindungsstück (102) erstreckt, wobei der zweite Abschnitt (104b) schwenkbar mit dem Verbindungsstück (102) verbunden ist;
einen oberen Schwingarm (106), der zur schwenkbaren Verbindung mit dem Rahmen (16) um eine obere Schwingachse (114) ausgelegt und schwenkbar mit dem Verbindungsstück (102) verbunden ist, wobei sich der obere Schwingarm (106) oberhalb des unteren Schwingarms (104) befindet, wobei der obere Schwingarm (106) Folgendes aufweist:
einen ersten Abschnitt (106a), der sich im Allgemeinen von der oberen Schwingachse (114) nach vorn erstreckt und seitlich vom Verbindungsstück (102) auf der ersten Seite des Verbindungsstücks (102) beabstandet ist, und
einen zweiten Abschnitt (106b), der sich im Allgemeinen seitlich von der Vorderseite des ersten Abschnitts (106a) bis zum Verbindungsstück (102) erstreckt, wobei der zweite Abschnitt (106b) schwenkbar mit dem Verbindungsstück (102) verbunden ist,
wobei das Verbindungsstück (102) relativ zu dem unteren und dem oberen Schwingarm (104, 106) um eine Lenkachse (98) schwenkbar ist; und
eine Stoßdämpferanordnung (108) mit einem ersten Ende, das zur schwenkbaren Verbindung mit dem Rahmen (16) oberhalb der oberen Schwingachse (114) ausgelegt ist, und einem zweiten Ende, das schwenkbar mit einem vorderen Abschnitt des ersten Abschnitts (106a) des oberen Schwingarms (106) verbunden ist.

2. Frontaufhängungsanordnung (100) nach Anspruch 1, wobei:
das mindestens eine vordere Bodenkontaktelement (22) ein einzelnes Vorderrad ist;
und
das Verbindungsstück (102) ein Achsschenkel ist, wobei der Achsschenkel zur drehbaren Verbindung mit dem Vorderrad ausgelegt ist.

3. Frontaufhängungsanordnung (100) nach Anspruch 1, wobei:
der untere Schwingarm (104) schwenkbar mit einem unteren Ende des Verbindungsstücks (102) verbunden ist; und
der obere Schwingarm (106) schwenkbar mit einem oberen Ende des Verbindungsstücks (102) verbunden ist.

4. Frontaufhängungsanordnung (100) nach Anspruch 1, wobei:
der untere Schwingarm (104) ferner einen dritten Abschnitt umfasst, der sich seitlich von einem hinteren Ende des ersten Abschnitts (104a) des unteren Schwingarms (104) erstreckt;
sich der dritte und der zweite Abschnitt (104c, 104b) des unteren Schwingarms (104) auf derselben Seite des ersten Abschnitts (104a) erstrecken; und
der dritte Abschnitt (104c) so ausgelegt ist, dass er den unteren Schwingarm (104) schwenkbar mit dem Rahmen (16) verbindet.

5. Frontaufhängungsanordnung (100) nach Anspruch 4, wobei:
der dritte Abschnitt (104c) des unteren Schwingarms (104) eine erste Halterung (132) aufweist, die zur schwenkbaren Verbindung mit dem Rahmen (16) um die untere Schwingachse (110) ausgelegt ist, und eine zweite Halterung (132), die zur schwenkbaren Verbindung mit dem Rahmen (16) um die untere Schwingachse (110) ausgelegt ist; und
sich die erste und zweite Halterung (132) auf gegenüberliegenden Seiten des Verbindungsstücks (102) befinden.

6. Frontaufhängungsanordnung (100) nach einem der Ansprüche 1 bis 5, wobei:
der obere Schwingarm (106) ferner einen dritten Abschnitt (106c) umfasst, der sich seitlich von einem hinteren Ende des ersten Abschnitts (106a) des oberen Schwingarms (106) erstreckt;
sich der dritte und zweite Abschnitt (106c, 106b) des oberen Schwingarms (106) auf einer gleichen Seite des ersten Abschnitts (106a) erstrecken; und
der dritte Abschnitt (106c) so ausgelegt ist, dass er den oberen Schwingarm (106) schwenkbar mit dem Rahmen (16) verbindet.

7. Frontaufhängungsanordnung (100) nach Anspruch 6, wobei:
der dritte Abschnitt (106c) des oberen Schwingarms (106) eine erste Halterung aufweist, die zur schwenkbaren Verbindung mit dem Rahmen (16) um die obere Schwingachse (114) ausgelegt ist, sowie eine zweite Halterung, die zur schwenkbaren Verbindung mit dem Rahmen (16) um die obere Schwingachse (114) ausgelegt ist; und
sich die erste und zweite Halterung (132) auf gegenüberliegenden Seiten des Verbindungsstücks (102) befinden.

8. Frontaufhängungsanordnung (100) nach Anspruch 1, wobei die Stoßdämpferanordnung (108) seitlich vom Verbindungsstück (102) auf der ersten Seite des Verbindungsstücks (102) beabstandet ist.

9. Frontaufhängungsanordnung (100) nach Anspruch 1, wobei sich die Stoßdämpferanordnung (108) vom ersten Ende der Stoßdämpferanordnung (108) nach vorn und unten zum zweiten Ende der Stoßdämpferanordnung (108) erstreckt und sich über den ersten Abschnitt (106a) des oberen Schwingarms (106) hinaus erstreckt.

10. Frontaufhängungsanordnung (100) nach Anspruch 1, wobei die Länge des oberen Schwingarms (106) kleiner ist als eine Länge des unteren Schwingarms (104).

11. Frontaufhängungsanordnung (100) nach Anspruch 1, wobei ein Querschnitt über die Breite des unteren Schwingarms (104) eine Außenseite aufweist, die sich seitlich nach innen und unten von der Oberseite des unteren Schwingarms (104) bis zu einer Unterseite des unteren Schwingarms (104) erstreckt.

12. Fahrzeug (10), umfassend:
einen Rahmen (16);
einen Motor (38), der mit dem Rahmen (16) montiert ist;
eine Rückaufhängungsanordnung (28), die betriebsfähig mit dem Rahmen (16) verbunden sind;
mindestens ein hinteres Bodenkontaktelement (26), das betriebsfähig mit der Rückaufhängungsanordnung (28) verbunden ist;
die Frontaufhängungsanordnung (100) nach einem der Ansprüche 1 bis 11, die betriebsfähig mit dem Rahmen (16) verbunden ist;
mindestens ein vorderes Bodenkontaktelement (22), das betriebsfähig mit der Frontaufhängungsanordnung (100) verbunden ist, wobei der Motor (38) mit mindestens einem des vorderen und des hinteren Bodenkontaktelements (22, 26) betriebsfähig verbunden ist; und
eine Lenkanordnung(62), die betriebsfähig mit dem Motor (102) verbunden ist, wobei die Lenkanordnung (62) umfasst:
eine Lenkeingabevorrichtung (64), die schwenkbar am Rahmen (16) gelagert ist;
eine Lenksäule (66, 68), die mit der Lenkeingabevorrichtung verbunden ist;
und
eine Spurstange (72), die betriebsfähig zwischen der Lenksäule (66, 68) und dem Verbindungsstück (102) verbunden ist, wobei die Spurstange (72) vertikal zwischen dem unteren und dem oberen Schwingarm (104, 106) angeordnet ist.

13. Fahrzeug (10) nach Anspruch 12, wobei das mindestens eine hintere Bodenkontaktelement (26) ein einzelnes Hinterrad ist.

14. Fahrzeug (10) nach Anspruch 12, wobei:
die Lenkvorrichtung (62) ferner einen Pitman-Arm (70) umfasst, der mit der Lenksäule (66, 68) verbunden ist;
wobei der Pitman-Arm (70) die Spurstange (72) schwenkbar mit der Lenksäule (66, 68) verbindet; und
wobei der Pitman-Arm (70) seitlich zwischen den Außenkanten der ersten Abschnitte (104a, 106a) des unteren und oberen Schwingarms (104, 106) und der Lenksäule (66, 68) angeordnet ist.

15. Fahrzeug (10) nach Anspruch 12, wobei eine Innenkante des ersten Abschnitts (104a, 106a) eines von dem unteren und dem oberen Schwingarm (104, 106) seitlich näher an der Lenkachse (98) liegt als ein Abschnitt der Spurstange (72), wobei es sich bei dem Abschnitt der Spurstange (72) um den Abschnitt der Spurstange (72) handelt, der längs mit dem ersten Abschnitt (104a, 106a) eines von dem unteren und dem oberen Schwingarm (104, 106) fluchtet.

## Revendications

1. Ensemble de suspension avant (100) d'un véhicule (10) comprenant :
un élément de liaison (102) adapté pour la liaison à au moins un élément avant en contact avec le sol (22) du véhicule (10) ;
un bras oscillant inférieur (104) adapté pour une liaison pivotante à un châssis (16) du véhicule autour d'un axe oscillant inférieur (110) et étant relié de manière pivotante à l'élément de liaison (102), le bras oscillant inférieur (104) ayant :
une première partie (104a) s'étendant généralement vers l'avant depuis l'axe oscillant inférieur (110) et étant latéralement espacée de l'élément de liaison (102) sur un premier côté de l'élément de liaison (102), et
une deuxième partie (104b) s'étendant généralement latéralement depuis un avant de la première partie (104a) jusqu'à l'élément de liaison (102), la deuxième partie (104b) étant reliée de manière pivotante à l'élément de liaison (102) ;
un bras oscillant supérieur (106) adapté pour une liaison pivotante au châssis (16) autour d'un axe oscillant supérieur (114) et étant relié de manière pivotante à l'élément de liaison (102), le bras oscillant supérieur (106) étant au-dessus du bras oscillant inférieur (104), le bras oscillant supérieur (106) ayant :
une première partie (106a) s'étendant généralement vers l'avant depuis l'axe oscillant supérieur (114) et étant latéralement espacée de l'élément de liaison (102) sur le premier côté de l'élément de liaison (102), et
une deuxième partie (106b) s'étendant généralement latéralement depuis un avant de la première partie (106a) jusqu'à l'élément de liaison (102), la deuxième partie (106b) étant reliée de manière pivotante à l'élément de liaison (102),
l'élément de liaison (102) pouvant pivoter par rapport aux bras oscillants inférieur et supérieur (104, 106) autour d'un axe de direction (98) ; et
un ensemble amortisseur (108) ayant une première extrémité adaptée pour une liaison pivotante au châssis (16) au-dessus de l'axe oscillant supérieur (114) et une seconde extrémité reliée de manière pivotante à une partie avant de la première partie (106a) du bras oscillant supérieur (106).

2. Ensemble de suspension avant (100) selon la revendication 1, dans lequel :
l'au moins un élément avant en contact avec le sol (22) est une unique roue avant ; et
l'élément de liaison (102) est une fusée de direction, la fusée de direction étant adaptée pour se relier en rotation à la roue avant.

3. Ensemble de suspension avant (100) selon la revendication 1, dans lequel :
le bras oscillant inférieur (104) est relié de manière pivotante à une extrémité inférieure de l'élément de liaison (102) ; et
le bras oscillant supérieur (106) est relié de manière pivotante à une extrémité supérieure de l'élément de liaison (102).

4. Ensemble de suspension avant (100) selon la revendication 1, dans lequel :
le bras oscillant inférieur (104) comprend en outre une troisième partie s'étendant latéralement depuis une extrémité arrière de la première partie (104a) du bras oscillant inférieur (104) ;
les troisième et deuxième parties (104c, 104b) du bras oscillant inférieur (104) s'étendent sur un même côté de la première partie (104a) ; et
la troisième partie (104c) est adaptée pour relier de manière pivotante le bras oscillant inférieur (104) au châssis (16).

5. Ensemble de suspension avant (100) selon la revendication 4, dans lequel :
la troisième partie (104c) du bras oscillant inférieur (104) a un premier support (132) adapté pour être relié de manière pivotante au châssis (16) autour de l'axe oscillant inférieur (110) et un second support (132) adapté pour être relié de manière pivotante au châssis (16) autour de l'axe oscillant inférieur (110) ; et
les premier et second supports (132) sont disposés de part et d'autre de l'élément de liaison (102).

6. Ensemble de suspension avant (100) selon l'une quelconque des revendications 1 à 5, dans lequel :
le bras oscillant supérieur (106) comprend en outre une troisième partie (106c) s'étendant latéralement depuis une extrémité arrière de la première partie (106a) du bras oscillant supérieur (106) ;
les troisième et deuxième parties (106c, 106b) du bras oscillant supérieur (106) s'étendent sur un même côté de la première partie (106a) ; et
la troisième partie (106c) est adaptée pour relier de manière pivotante le bras oscillant supérieur (106) au châssis (16).

7. Ensemble de suspension avant (100) selon la revendication 6, dans lequel :
la troisième partie (106c) du bras oscillant supérieur (106) a un premier support adapté pour être relié de manière pivotante au châssis (16) autour de l'axe oscillant supérieur (114) et un second support adapté pour être relié de manière pivotante au châssis (16) autour de l'axe oscillant supérieur (114) ; et
les premier et second supports (132) sont disposés de part et d'autre de l'élément de liaison (102).

8. Ensemble de suspension avant (100) selon la revendication 1, dans lequel l'ensemble d'amortisseur (108) est espacé latéralement de l'élément de liaison (102) sur le premier côté de l'élément de liaison (102).

9. Ensemble de suspension avant (100) selon la revendication 1, dans lequel l'ensemble d'amortisseur (108) s'étend vers l'avant et vers le bas depuis la première extrémité de l'ensemble d'amortisseur (108) jusqu'à la seconde extrémité de l'ensemble d'amortisseur (108) et s'étend au-dessus de la première partie (106a) du bras oscillant supérieur (106).

10. Ensemble de suspension avant (100) selon la revendication 1, dans lequel une longueur du bras oscillant supérieur (106) est inférieure à une longueur du bras oscillant inférieur (104).

11. Ensemble de suspension avant (100) selon la revendication 1, dans lequel une section transversale prise sur une largeur du bras oscillant inférieur (104) a un côté externe s'étendant latéralement vers l'intérieur et vers le bas depuis un sommet du bras oscillant inférieur (104) jusqu'à un fond du bras oscillant inférieur (104).

12. Véhicule (10) comprenant :
un châssis (16) ;
un moteur (38) monté sur le châssis (16) ;
un ensemble de suspension avant (28) relié de manière fonctionnelle au châssis (16) ;
au moins un élément arrière en contact avec le sol (26) relié de manière fonctionnelle à l'ensemble de suspension avant (28) ;
l'ensemble de suspension avant (100) selon l'une quelconque des revendications 1 à 11 relié de manière fonctionnelle au châssis (16) ;
au moins un élément avant en contact avec le sol (22) relié de manière fonctionnelle à l'ensemble de suspension avant (100), le moteur (38) étant relié de manière fonctionnelle à au moins l'un des éléments avant et arrière en contact avec le sol (22, 26) ; et
un ensemble de direction (62) relié de manière fonctionnelle à l'élément de liaison (102), l'ensemble de direction (62) comprenant :
un dispositif d'entrée de direction (64) supporté de manière pivotante par le châssis (16) ;
une colonne de direction (66, 68) reliée au dispositif d'entrée de direction ; et
une biellette de direction (72) reliée de manière fonctionnelle entre la colonne de direction (66, 68) et l'élément de liaison (102), la biellette de direction (72) étant verticalement entre les bras oscillants inférieur et supérieur (104, 106).

13. Véhicule (10) selon la revendication 12, dans lequel l'au moins un élément arrière en contact avec le sol (26) est une unique roue arrière.

14. Véhicule (10) selon la revendication 12, dans lequel :
l'ensemble de direction (62) comprend en outre un bras de direction (70) relié à la colonne de direction (66, 68) ;
le bras de direction (70) relie de manière pivotante la biellette de direction (72) à la colonne de direction (66, 68) ; et
le bras de direction (70) étant disposé latéralement entre des bords externes des premières parties (104a, 106a) des bras oscillants inférieur et supérieur (104, 106) et la colonne de direction (66, 68).

15. Véhicule (10) selon la revendication 12, dans lequel un bord interne de la première partie (104a, 106a) de l'un des bras oscillants inférieur et supérieur (104, 106) est latéralement plus proche de l'axe de direction (98) qu'une partie de la biellette de direction (72), la partie de la biellette de direction (72) étant la partie de la biellette de direction (72) longitudinalement alignée avec la première partie (104a, 106a) de l'un des bras oscillants inférieur et supérieur (104, 106).
